# EUROPÄISCHE PATENTSCHRIFT

(11) **EP 3 527 862 B1**
(45) Veröffentlichungstag und Bekanntmachung des Hinweises auf die Patenterteilung: **21.10.2020**
(21) Anmeldenummer: 18157399.9
(22) Anmeldetag: 19.02.2018
(51) Int. Cl.: F16K 1/52, F24D 19/10, G05D 7/01

(54) **VENTIL MIT EINER EINRICHTUNG ZUR VOREINSTELLUNG DES STRÖMUNGSKANALQUERSCHNITTES**
VALVE WITH A DEVICE FOR PRESETTING THE FLOW CHANNEL CROSS-SECTION
SOUPAPE POURVUE D'UN DISPOSITIF DE PRÉSÉLECTION DE LA SECTION DU CANAL D'ÉCOULEMENT

(43) Veröffentlichungstag der Anmeldung: 21.08.2019
(73) Patentinhaber: Oventrop GmbH & Co. KG, 59939 Olsberg (DE)
(72) Erfinder: Löffler, Gerhard, 59939 Olsberg (DE)
(74) Vertreter: Köchling, Conrad-Joachim

(56) Entgegenhaltungen:
- EP-B1- 0 751 448
- EP-B1- 2 338 093
- WO-A2-2015/010685

## Beschreibung

Die Erfindung betrifft ein Ventil mit einer Einrichtung zur Voreinstellung des Strömungskanalquerschnittes für die durch das Ventil strömende Flüssigkeit für flüssigkeitsführende Heizungs- oder Kühlanlagen, bestehend aus einem ein- oder mehrteiligem Gehäuse mit mindestens einem stromaufwärts angeordnetem Einlass und mindestens einem stromabwärts angeordnetem Auslass, wobei der Einlass mit dem Auslass über einen Strömungskanal verbunden sind, und einem Anschlussstutzen, der in den Strömungskanal mündet, mit einer im Anschlussstutzen axial verschiebbar angeordneten Spindel mit aus dem Gehäuse ragendem Bedienteil und im Gehäuse angeordneten auf einen Ventilsitz wirkenden, an die Spindel gekoppelten, aus mindestens zwei relativ zueinander beweglichen Teilen bestehenden Drosselkörper, mit einer Anschlussgeometrie für einen auf die Spindel axial einwirkenden Betätigungsaufsatz sowie mit einem im Anschlussstutzen angeordneten Kopfstück und einem Ventilsitz, wobei die in dem Anschlussstutzen angeordnete Teile, nämlich mindestens Spindel, Drosselkörper, Ventilsitz und Kopfstück zu einer Montageeinheit zusammengefasst sind, die in den Anschlussstutzen als Einheit montierbar und demontierbar ist, wobei die Einzelteile unverlierbar miteinander verbunden sind.

Aus DE 4407447 C2 und WO 2015/010685 A2 sind Thermostatventile bekannt, die mit zwei Einrichtungen zur Begrenzung des durch das Ventil führenden Strömungskanalquerschnittes und damit zur Einstellung der Durchflussmenge ausgestattet sind. Diese Einrichtungen umfassen einerseits eine erste, voreinstellbare Drosselstelle, die den durch das Ventil führenden Strömungskanalquerschnitt dauerhaft begrenzt und andererseits eine zweite, hubabhängige Drosselstelle, die den Strömungskanalquerschnitt in Abhängigkeit von einer Regelgröße (z.B. der Raumtemperatur) durch einen seine Lage relativ zum Ventilsitz veränderbarem Ventilverschlussstück verändert.

Diese beiden in Reihe geschalteten Drosselstellen führen zu einem unvorteilhaftem Durchflussverhalten des Thermostatventils, da bei kleinen Voreinstellungen und damit kleinen Strömungskanalquerschnitten der ersten Drosselstelle die Regelung der Durchflussmenge durch die zweite Drosselstelle schon ab einem kleinen Ventilhub den Strömungskanalquerschnitt der ersten Drosselstelle übersteigt und damit wirkungslos wird.

Dies führt zu einem unerwünschten Zweipunktverhalten, bei der die zweite Drosselstelle ständig zwischen Nulldurchfluss und der maximalen, durch die Voreinstellung der ersten Drosselstelle bestimmte Durchflussmenge wechselt. Dies hat eine unerwünscht schwankende Raumtemperatur und damit einen erhöhten Energieverbrauch zur Folge. Weiterhin ist hierbei die Ventilautorität der zweiten Drosselstelle unerwünscht niedrig, was zu einer weiteren Verschlechterung der Regelgüte führt.

Bei großem Voreinstellwert der ersten Drosselstelle ist wiederum ein großer Ventilhub der zweiten Drosselstellung erforderlich, um den voreingestellten Strömungskanalquerschnitt der ersten Drosselstelle und damit die voreingestellte Durchflussmenge zu erreichen. Dieser unterscheidet sich wesentlich von dem wirksamen Ventilhub bei kleiner Voreinstellung.

Nachteilig bei diesen Ausführungen sind die zwei in Reihe geschalteten Drosselstellen, da in Abhängigkeit von der Voreinstellung der ersten Drosselstelle unterschiedlich große Hübe der zweiten Drosselstelle erforderlich sind, um die gewünschten, voreingestellten Durchflüsse zu erreichen. Die üblicherweise zur Raumtemperaturregelung mit den Thermostatventilen zusammenarbeitenden Raumthermostaten ändern ihre Hubstellung und damit auch die Hubstellung des Ventils raumtemperaturabhängig, so dass bei kleinen Voreinstellungen der Solldurchfluss schon bei kleinsten Raumtemperaturänderungen und bei großen Voreinstellungen nur bei großen Raumtemperaturänderungen von mehreren Grad Kelvin erreicht wird. Dies führt zu unerwünschten Raumtemperaturabweichungen.

In dem in WO 2015/010685 A2 beschriebenen Thermostatventil ist zusätzlich zu der ersten und zweiten Drosselstelle eine Druckregeleinrichtung, welche die Druckdifferenz über die beiden Drosselstellen konstant hält, eingebracht. Die zuvor beschriebenen Nachteile der zwei in Reihe geschalteten Drosselstellen bestehen auch bei dieser Ventilausführung.

Aus EP 2338093 B1 ist ein Steuerventil bekannt, bei der die erste, voreinstellbare und die zweite, hubabhängige Drosselstelle zu einer aus zwei axial zueinander fixierten aber gegeneinander verdrehbaren, mit einem Sitz zusammenwirkenden Zylinderhalbschalen gebildete Drosselstelle zusammengefasst sind und bei dem die Druckdifferenz über die Drosselstelle mittels einer Druckregeleinrichtung konstant gehalten wird. Nachteilig bei dieser Ausführung ist der große Platzbedarf dieser Konstruktion, die somit nicht in vorhandene Thermostatventilanschlussstutzen eingebracht werden kann, und dass die in dem Anschlussstutzen angeordneten Bauteile, insbesondere die aus Sitz und zwei Zylinderhalbschalen bestehende Drosselstelle, Spindel, Druckregeleinrichtung und Kopfstück nicht zu einer auswechselbaren Montageeinheit zusammengefasst sind und somit auch nicht als eine Einheit ausgetauscht werden kann.

Aus EP 0751448 B1 ist ein Durchflussregelventil bekannt, bei dem die erste, voreinstellbare und die zweite, hubabhängige Drosselstelle zu einer Drosselstelle zusammengefasst sind und bei dem die Druckdifferenz über die Drosselstelle mittels einer Druckregeleinrichtung konstant gehalten wird, wobei die Druckregeleinrichtung gegenüberliegend zur voreinstellbaren Drosselstelle in das Gehäuse eingebracht ist.

Nachteilig bei dieser Ausführung ist ebenfalls der große Platzbedarf dieser Konstruktion und dass die in den Anschlussstutzen angeordneten Bauteile, insbesondere die aus Sitz und Kegel bestehende Drosselstelle, Spindel, Druckregeleinrichtung und Kopfstück nicht zu einer auswechselbaren Montageeinheit zusammengefasst sind und somit auch nicht als eine Einheit ausgetauscht werden können.

Da Thermostatventile in der Regel aus einem Gehäuse bestehen, mit dem der Hersteller durch Einschrauben unterschiedlich aufgebauter Ventileinsätze unterschiedliche Ventilbaureihen aufbauen kann, sind die Innenkonturen des Anschlussstutzens, in den die Ventileinsätze eingeschraubt werden können, bei den jeweiligen Herstellern gleich ausgeführt. Dies ermöglicht den Herstellern eine kostengünstige Fertigung der Ventilbaureihen unter Verwendung immer gleicher Gehäuse.

Auch für den Anwender ist dies vorteilhaft, da es ihm erlaubt, auch nachträglich durch Austausch der Ventileinsätze auf sich ändernde Bedingungen in der Heizungsanlagen zu reagieren und bei Ventildefekten durch Austausch der Ventileinsätze eine Reparatur des Ventils herbeizuführen. Dies ist mittels handelsüblicher Montageschleusen auch unter Anlagendruck möglich. Hierdurch wird bei Bestandanlagen mit geringem Aufwand ein Austausch der Ventileinsätze ermöglicht.

Ausgehend von dem Stand der Technik liegen der Erfindung die Aufgaben zugrunde, einen als Montageeinheit ausgeführten Ventileinsatz zu schaffen, der mindestens Spindel, Drosselkörper, Sitz und Kopfstück umfasst und in marktübliche Thermostatventilgehäuse eingebracht werden kann, der mit einer Einrichtung zur Voreinstellung des Strömungskanalquerschnittes für die durch das Ventil strömende Flüssigkeit und einer diese überlagernde, hubabhängige Einrichtung zur Änderung des Strömungskanalquerschnittes ausgestattet ist, wobei es bei allen Voreinstellungen der ersten Einrichtung eines gleich großen Ventilhubs der zweiten Einrichtung bedarf, um die voreingestellte Durchflussmenge durch das Ventil strömen zu lassen und somit eine proportionale Regelung des Durchflusses bei allen Voreinstellungen zu ermöglichen und die voreingestellten Durchflusswerte unabhängig von der Voreinstellung bei gleicher Hubgröße zu erreichen. Die Montageeinheit soll bei Bedarf auch eine Druckregeleinrichtung, die den Druck über die Drosselstellen der ersten und zweiten Einrichtung konstant hält, umfassen. Durch Nutzung vorhandener Gehäuse soll auf kostengünstig zu fertigende Thermostatventilbaureihen aufgebaut werden.

Zur Lösung der Aufgabe schlägt die Erfindung vor, dass die den Drosselkörper bildenden, relativ zueinander beweglichen Teile mit Durchbrüchen versehene Mantelflächen ausbilden, wobei die Durchbrüche Begrenzungsflächen des verstellbaren Strömungsquerschnittes bilden und dieser mindestens in Teilbereichen von dem Ventilsitz abgedeckt ist, und dass die sich radial zur axialen Bewegungsrichtung des Drosselkörpers erstreckende Breite des Strömungskanalquerschnitts durch die mittels des Bedienteils veränderbare Position des zweiten Teils voreingestellt ist, und dass die parallel zur Bewegungsrichtung des Drosselkörpers sich erstreckende Höhe des veränderbaren Strömungskanalquerschnittes durch den mittels des Betätigungsaufsatzes relativ zum Sitz bewegten Drosselkörpers veränderbar ist.

Gemäß der Erfindung wird ein kostengünstig zu fertigendes Ventil, insbesondere Thermostatventil, zur Verfügung gestellt, welches aus einem Gehäuse und einem darin eingebrachten Ventileinsatz besteht, wobei der Ventileinsatz einen voreinstellbaren Strömungsquerschnitt beinhaltet und wobei dieser im Wesentlichen aus einem Sitz und einem Drosselkörper besteht, wobei die Voreinstellung die radial zur Bewegungsrichtung des Drosselkörpers erstreckende Breite des Strömungskanalquerschnitts verändert und wobei die axial zur Bewegungsrichtung des Drosselkörpers erstreckende Höhe des veränderbaren Strömungskanalquerschnittes durch die Hubbewegung des Drosselkörpers verändert wird und der Ventileinsatz als eine Montageeinheit ausgeführt ist, die in ihrer Gesamtheit in vorhandene Thermostatventilgehäuse montierbar oder demontierbar ist und mindestens einen voreinstellbaren Strömungsquerschnitt und mindestens Spindel, Drosselkörper, Sitz, Kopfstück und bei Bedarf eine Druckregeleinrichtung umfasst.

Die Einrichtung zur Voreinstellung des Strömungskanalquerschnittes des Ventils besteht aus mindestens dem Sitz und einem aus mindestens zwei Teilen bestehenden Drosselkörper, wobei die Breite des voreinstellbaren Strömungskanalquerschnittes durch ein Bedienteil einstellbar ist und die Höhe durch die Relativbewegung des Drosselkörpers zum Sitz veränderbar ist, wobei bei Bedarf eine Druckregeleinrichtung vorgesehen ist.

Hierzu ist insbesondere vorgesehen, dass der Drosselkörper mindestens aus einem ersten an der Spindel drehbar befestigtem Teil und einem zweiten, verdrehsicher mit dem ersten Teil und verdrehsicher mit dem Sitz verbundenen, auf der Spindel längs verstellbaren und axial durchströmbaren Teil besteht, wobei das zweite Teil in Richtung auf das erste Teil und von diesem weg beweglich ist.

Bevorzugt ist dabei vorgesehen, dass zur Bildung der Breite des Strömungsquerschnittes bei den sich relativ zueinander beweglichen Teile die dem ersten Teil zugeordnete Begrenzungsfläche und die dem zweiten Teil zugeordnete Begrenzungsfläche im Winkel zur Bewegungsrichtung des Drosselkörpers angeordnet sind.

Auch ist bevorzugt vorgesehen, dass der von den beiden relativ zueinander beweglichen Teile ausgebildete, veränderbare Strömungsquerschnitt im Winkel zur Bewegungsrichtung des Drosselkörpers angeordnete Begrenzungsflächen aufweist, die radial zur Bewegungsrichtung des Drosselkörpers seine Breite bestimmen.

Zudem ist vorgesehen, dass der Drosselkörper stromaufwärts vom verstellbaren Strömungsquerschnitt ein Dichtelement aufweist, das den Drosselkörper gegenüber dem Sitz abdichtet.

Vorteilhaft ist auch, dass der Drosselkörper eine mit dem Sitz formschlüssige Kontur aufweist, die einen dichten Verschluss des Strömungskanalquerschnittes und eine untere Begrenzung des Spindelhubs ermöglicht.

Zusätzlich kann vorgesehen sein, dass die Montageeinheit eine Druckregeleinrichtung, welche die Druckdifferenz in Strömungsrichtung vor und hinter dem Drosselkörpers konstant hält, umfasst.

Hierbei ist bevorzugt vorgesehen, dass die Druckregeleinrichtung eine bewegliche Trennwand mit daran angebrachtem Verschlusskörper aufweist und dass in Abhängigkeit von der auf die bewegliche Trennwand einwirkenden Druckdifferenz der stromaufwärts vor und stromabwärts hinter dem verstellbaren Strömungsquerschnitt anliegenden Drücke ein in Strömungsrichtung in Reihe mit dem verstellbaren Strömungsquerschnitt angeordneter, durch den Verschlusskörper und ein Sitzelement gebildeter Drosselquerschnitt in seiner Querschnittsfläche veränderbar ist.

Um die Bedienung zu erleichtern ist vorgesehen, dass die Spindel mit einer drehfest an ihr angebrachten Handhabe zur Einstellung der Breite des Strömungskanalquerschnittes versehen ist.

Hierbei ist vorgesehen, dass die Handhabe abnehmbar ist.

Auch kann vorgesehen sein, dass die Handhabe mit Kennungen für die Einstellposition versehen ist, die mit einer drehfest an dem Ventileinsatz befestigten Kennung korrespondiert, so dass die Voreinstellwerte ablesbar sind.

In an sich bekannter Weise ist vorgesehen, dass innerhalb der Montageeinheit eine Druckfeder angeordnet ist, die auf die Ventilspindel einwirkt.

Zudem kann vorgesehen sein, die Montageeinheit stromaufwärts mit einem Sieb versehen ist.

Bevorzugt ist zudem vorgesehen, dass der Winkel der Begrenzungsflächen zueinander gleich ist und zwischen einem Winkel von 90° zur Spindellängsachse und 0° dazu liegt, vorzugsweise in einem Bereich zwischen 60° und 30°.

Ein Ausführungsbeispiel der Erfindung ist in der Zeichnung dargestellt und im Folgenden näher beschrieben.

Es zeigt:
- Fig. 1: ein komplettes Ventil im Zusammenbau in Ansicht, teilweise geschnitten;
- Fig. 2: die Montageeinheit des Ventils in Ansicht im Schnitt gesehen;
- Fig. 3: eine Variante des Einsatzes mit Druckregeleinrichtung ebenfalls im Schnitt gesehen;
- Fig. 4a: eine Einzelheit in Ansicht in einer ersten Betriebsstellung;
- Fig. 4B: die Einzelheit in einer zweiten Betriebsstellung;
- Fig. 5: Einzelheiten in einer Betriebsstellung in Ansicht;
- Fig. 6: Einzelheiten in einer Explosionsstellung in Ansicht.

In den Zeichnungen ist ein Ventil 1 mit einer Einrichtung zur Voreinstellung des Strömungskanalquerschnittes für durch das Ventil strömende Flüssigkeiten für flüssigkeitsführende Heizungs- oder Kühlanlagen gezeigt. Es besteht aus einem ein- oder mehrteiligem Gehäuse 2 mit mindestens einem stromaufwärts angeordneten Einlass 3 und mindestens einem stromabwärts angeordneten Auslass 4. Der Einlass 3 ist mit dem Auslass 4 über einen Strömungskanal verbunden. Ein Anschlussstutzen 5 ist zwischen Einlass 3 und Auslass 4 vorgesehen, der in den Strömungskanal einmündet. Im Anschlussstutzen 5 ist axial verschiebbar eine Spindel 6 angeordnet, die ein aus dem Gehäuse 2 ragendes Bedienteil 9 aufweist, wobei im Gehäuse ein auf einen Ventilsitz 11 wirkender, mit der Spindel 6 gekoppelter, aus mindestens zwei relativ zueinander beweglichen Teilen 12, 13 bestehender Drosselkörper 14 vorgesehen ist, der eine Anschlussgeometrie 7 für einen auf die Spindel 6 axial einwirkenden Betätigungsaufsatz 8 aufweist, sowie mit einem im Anschlussstutzen 5 angeordneten Kopfstück 19 und einem Ventilsitz 11 ausgestattet ist.

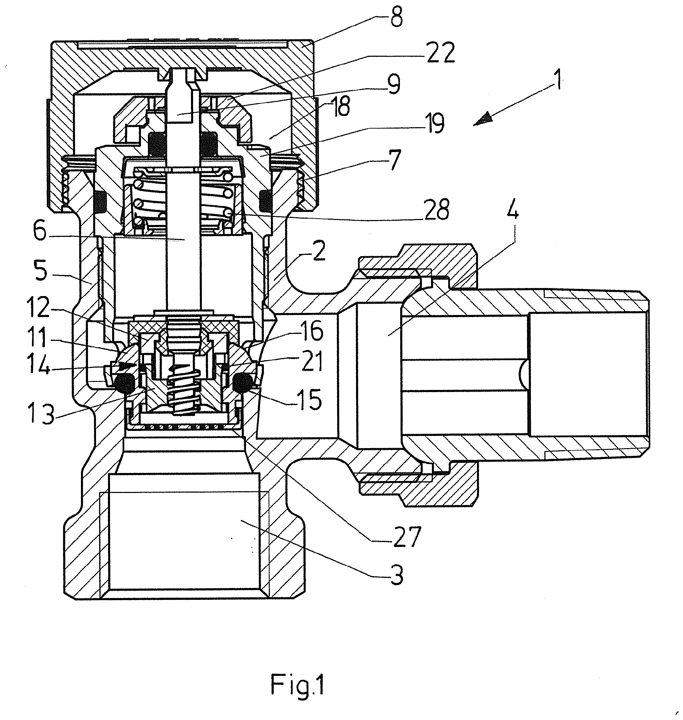

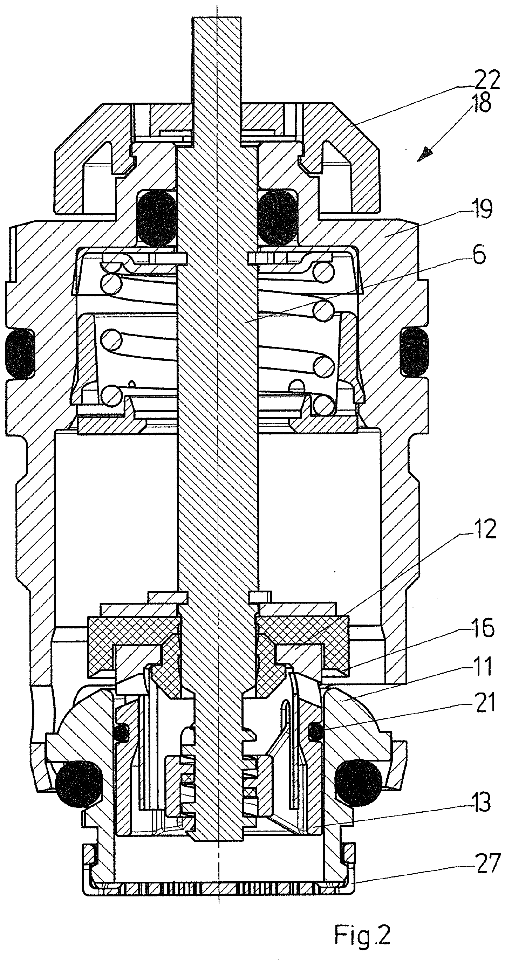

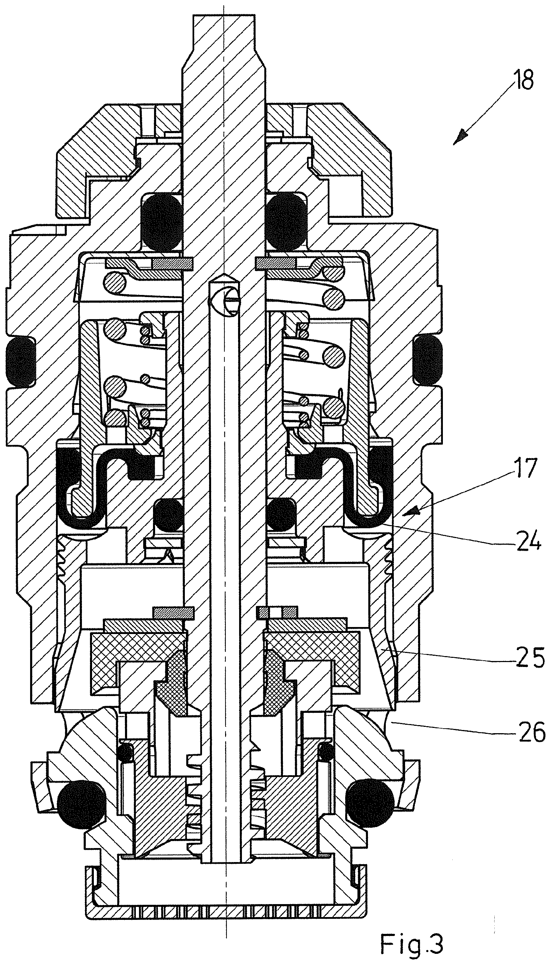

Die in dem Anschlussstutzen 5 angeordneten Teile, nämlich mindestens die Spindel 6, der Drosselkörper 14, der Ventilsitz 11 und das Kopfstück 19 sind zu einer Montageeinheit (Einsatz 18) zusammengefasst, die in den Anschlussstutzen 5 als Einheit montierbar und demontierbar ist, wobei vorzugsweise die Einzelteile unverlierbar miteinander verbunden sind. In der Figur 1 ist gezeigt, wie der Einsatz 18 im Gehäuse 2 angeordnet ist. Der Einsatz 18 ist separat in den Figuren 2 und 3 in Varianten gezeigt.

Die den Drosselkörper 14 bildenden relativ zueinander beweglichen Teile 12, 13 bilden mit Durchbrüchen versehene Mantelflächen aus, wobei die Durchbrüche Begrenzungsflächen 20, 23 des verstellbaren Strömungsquerschnittes 10 bilden, der mindestens in Teilbereichen von dem Ventilsitz 11 abgedeckt ist. Die sich radial zur axialen Bewegungsrichtung des Drosselkörpers 14 erstreckende Breite b des Strömungskanalquerschnittes 10 ist durch mittels des Bedienteils 9 veränderbare Position des zweiten Teils 13 voreinstellbar. Die parallel zur Bewegungsrichtung des Drosselkörpers 14 sich erstreckende Höhe h des veränderbaren Strömungskanalquerschnittes ist durch den mittels des Betätigungsaufsatzes 8 relativ zum Sitz 11 bewegbaren Drosselkörper 14 veränderbar.

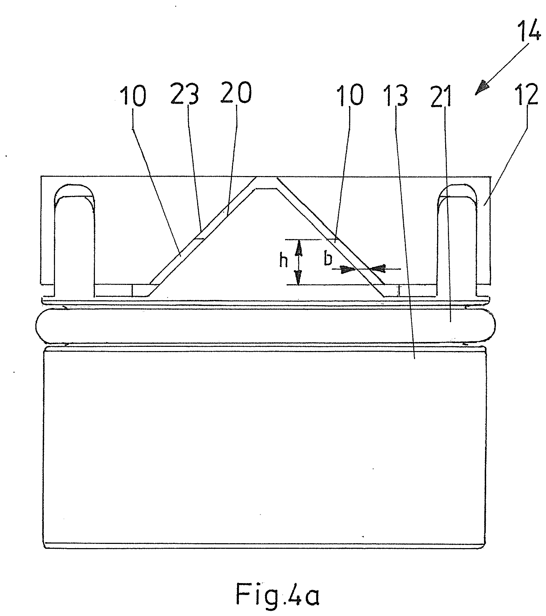

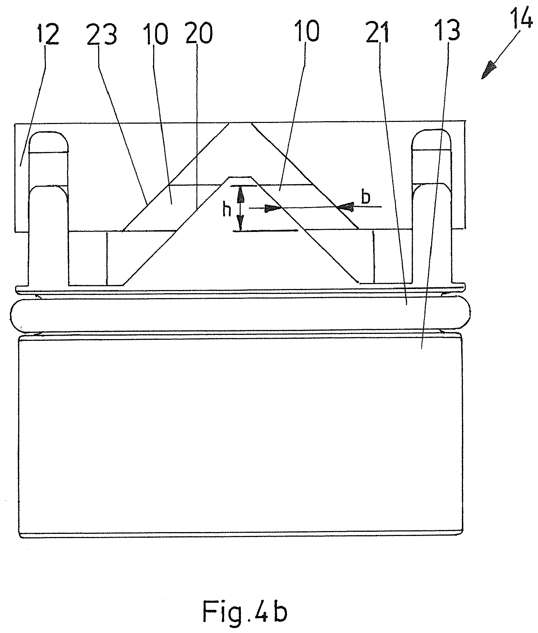

Wie insbesondere in Figur 4a und Figur 4b gezeigt, weist der Drosselkörper 14 mindestens ein erstes, an der Spindel 6 drehbar befestigtes Teil 12 und ein zweites, verdrehsicher mit dem ersten Teil 12 und verdrehsicher mit dem Sitz 11 verbundenes, auf der Spindel 6 längsverstellbares und axial durchströmbares Teil 13 auf, wobei das zweite Teil 13 in Richtung auf das erste Teil 12 und von diesem weg beweglich ist.

Zur Einstellung der Breite b des Strömungsquerschnittes 10 sind bei den sich relativ zueinander beweglichen Teilen 12, 13 die dem ersten Teil 12 zugeordnete Begrenzungsfläche 23 und die dem zweiten Teil 13 zugeordnete Begrenzungsfläche 20 in einem Winkel zur Bewegungsrichtung des Drosselkörpers angeordnet, insbesondere nicht axial dazu und nicht orthogonal rechtwinklig dazu.

Der von den beiden relativ zueinander beweglichen Teilen 12, 13 ausgebildete, veränderbare Strömungsquerschnitt 10 weist im Winkel zu der Bewegungsrichtung des Drosselkörpers 14 angeordnete Begrenzungsflächen 20, 23 auf, die etwa radial zur Bewegungsrichtung des Drosselkörpers 14 die Breite b bestimmen.

Der Drosselkörper 14 weist stromaufwärts vom verstellbaren Strömungsquerschnitt 10 ein Dichtelement 21 auf, welches den Drosselkörper 14 gegenüber dem Sitz 11 abdichtet. Der Drosselkörper 14 weist eine mit dem Sitz 11 komplementäre Kontur auf, die einen dichten Verschluss des Strömungskanalquerschnittes 10 und eine untere Begrenzung des Spindelhubs ermöglicht.

Die Montageeinheit (Einsatz 18) weist zudem, wie in Figur 3 gezeigt, eine Druckregeleinrichtung 17 auf, welche die Druckdifferenz in Strömungsrichtung vor und hinter dem Drosselkörper 14 konstant hält. Die Druckregeleinrichtung 17 weist eine bewegliche Trennwand 24 (Membran) mit daran angebrachtem Verschlusskörper 25 auf, wobei in Abhängigkeit von der auf die bewegliche Trennwand 24 einwirkenden Druckdifferenz der stromaufwärts vor und stromabwärts hinter dem verstellbaren Strömungsquerschnitt 10 anliegenden Drücke ein in Strömungsrichtung in Reihe mit dem verstellbaren Strömungsquerschnitt 10 angeordneter, durch den Verschlusskörper 25 und ein Sitzelement gebildeter Drosselquerschnitt 26 in seiner Querschnittsfläche veränderbar ist.

Wie insbesondere in Figur 1 gezeigt, ist die Spindel 6 mit einer drehfest an ihr angebrachten Handhabe 22 zur Einstellung der Breite b des Strömungskanalquerschnittes 10 ausgestattet. Diese Handhabe 22 kann fest installiert sein oder auch abnehmbar sein. Zusätzlich kann die Handhabe 22 mit Kennzeichnungen für die jeweilige Einstellposition versehen sein, die mit drehfest an dem Einsatz 18 vorgesehenen Markierungen korrespondiert, sodass die Voreinstellwerte abgelesen werden können.

In an sich bekannter Weise ist innerhalb der Montageeinheit (Einsatz 18) eine Druckfeder 28 vorgesehen, gegen welche die Ventilspindel 6 bei entsprechender Betätigung verschoben werden kann und die zur Rückstellung der Ventilspindel 6 benutzt wird.

Zusätzlich kann der Einsatz 18 stromaufwärts mit einem Sieb 27 ausgestattet sein, um Verunreinigungen zu vermeiden.

In Figur 4a sind das erste und das zweite Teil 12, 13 des Drosselkörpers 14 in einer ersten Voreinstellung der beiden Teile zueinander gezeigt, die einen sehr kleinen eingestellten Strömungsquerschnitt bewirken. In Figur 4b ist das erste und das zweite Teil 12, 13 des Drosselkörpers 14 in einer zweiten Hubstellung der beiden Teile zueinander gezeigt, bei welcher der Strömungsquerschnitt 10 relativ groß ist.

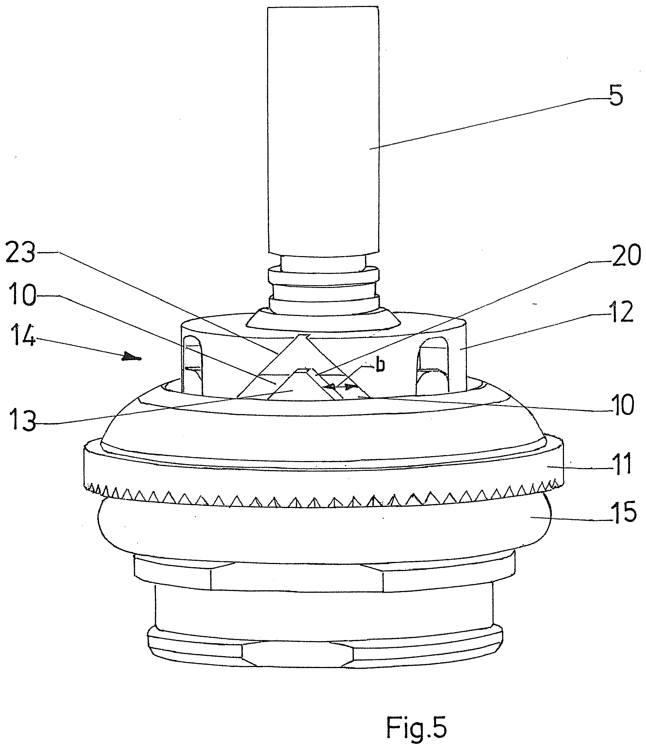

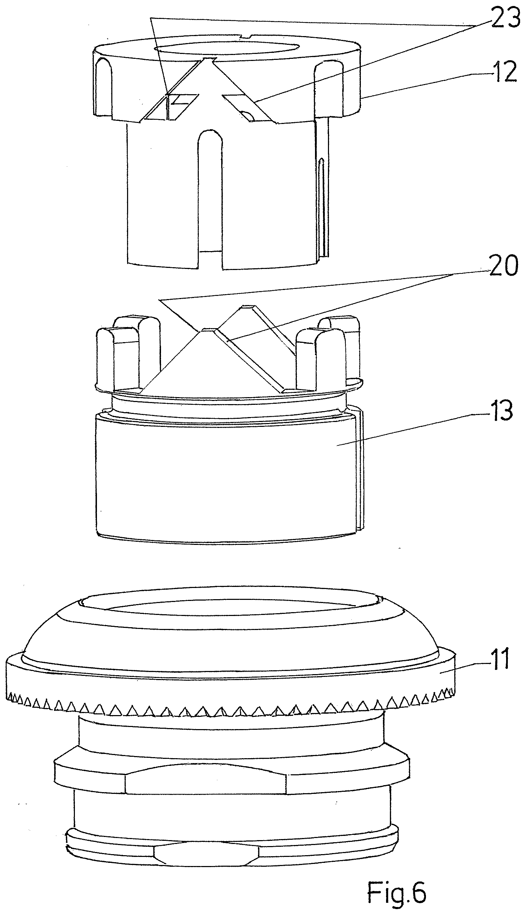

Durch entsprechende Vorsprünge des zweiten Teiles 13 und dazu passende Ausnehmungen des ersten Teiles 12 sind die Teile zueinander geführt und relativ zueinander unverdrehbar gehalten. Die Vorsprünge und Ausnehmungen sind in den Figuren 4 bis 6 gut ersichtlich.

Die Erfindung gibt ein Ventil an, welches eine einfache Voreinstellung von Durchflüssen ermöglicht, wobei die im Stand der Technik bekannten unerwünschten Raumtemperaturabweichungen vermieden werden. Zudem ist der Platzbedarf der angegebenen konstruktiven Lösung relativ gering, sodass ein Austausch der Montageeinheit, insbesondere auch in bestehende Gehäuse möglich ist.

Die Erfindung ist nicht auf die Ausführungsbeispiele beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

### Bezugszeichen

- 1: Ventil
- 2: Gehäuse
- 3: Einlass
- 4: Auslass
- 5: Anschlussstutzen
- 6: Spindel
- 7: Anschlussgeometrie
- 8: Betätigungsaufsatz
- 9: Bedienteil
- 10: Strömungsquerschnitt
- 11: Ventilsitz
- 12: erstes Teil
- 13: zweites Teil
- 14: Drosselkörper
- 15: Dichtung
- 16: Kontur
- 17: Druckregeleinrichtung
- 18: (Montageeinheit) Einsatz
- 19: Kopfstück
- 20: Begrenzungsfläche von 13
- 21: Dichtelement
- 22: Handhabe
- 23: Begrenzungsfläche von 12
- 24: Trennwand von 17
- 25: Verschlusskörper
- 26: Drosselquerschnitt
- 27: Sieb
- 28: Druckfeder
- b: Breite von 10
- h: Höhe von 10

## Patentansprüche

1. Ventil (1) mit einer Einrichtung zur Voreinstellung des Strömungskanalquerschnittes für die durch das Ventil (1) strömende Flüssigkeit für flüssigkeitsführende Heizungs- oder Kühlanlagen, bestehend aus einem ein- oder mehrteiligem Gehäuse (2) mit mindestens einem stromaufwärts angeordnetem Einlass (3) und mindestens einem stromabwärts angeordnetem Auslass (4), wobei der Einlass (3) mit dem Auslass (4) über einen Strömungskanal verbunden sind, und einem Anschlussstutzen (5), der in den Strömungskanal mündet, mit einer im Anschlussstutzen (5) axial verschiebbar angeordneten Spindel (6) mit aus dem Gehäuse (2) ragendem Bedienteil (9) und im Gehäuse (2) angeordneten auf einen Ventilsitz (11) wirkenden, an die Spindel (6) gekoppelten, aus mindestens zwei relativ zueinander beweglichen Teilen (12, 13) bestehenden Drosselkörper (14), mit einer Anschlussgeometrie (7) für einen auf die Spindel (6) axial einwirkenden Betätigungsaufsatz (8) sowie mit einem im Anschlussstutzen (5) angeordneten Kopfstück (19) und dem Ventilsitz (11), wobei die in dem Anschlussstutzen (5) angeordneten Teile, nämlich mindestens Spindel (6), Drosselkörper (14), Ventilsitz (11) und Kopfstück (19) zu einer Montageeinheit (18) zusammengefasst sind, die in den Anschlussstutzen (5) als Einheit montierbar und demontierbar ist, wobei die Einzelteile unverlierbar miteinander verbunden sind, **dadurch gekennzeichnet, dass** die den Drosselkörper (14) bildenden, relativ zueinander beweglichen Teile (12, 13) mit Durchbrüchen versehene Mantelflächen ausbilden, wobei die Durchbrüche Begrenzungsflächen (20, 23) des verstellbaren Strömungsquerschnittes (10) bilden und dieser mindestens in Teilbereichen von dem Ventilsitz (11) abgedeckt ist, und dass die sich radial zur axialen Bewegungsrichtung des Drosselkörpers (14) erstreckende Breite (b) des Strömungskanalquerschnitts (10) durch die mittels des Bedienteils (9) veränderbare Position des zweiten Teils (13) voreingestellt ist, und dass die parallel zur Bewegungsrichtung des Drosselkörpers (14) sich erstreckende Höhe (h) des veränderbaren Strömungskanalquerschnittes (10) durch den mittels des Betätigungsaufsatzes (8) relativ zum Sitz (11) bewegten Drosselkörpers (14) veränderbar ist.

2. Ventil nach Anspruch 1, **dadurch gekennzeichnet, dass** der Drosselkörper (14) mindestens aus einem ersten an der Spindel (6) drehbar befestigtem Teil (12) und einem zweiten, verdrehsicher mit dem ersten Teil (12) und verdrehsicher mit dem Sitz (11) verbundenen, auf der Spindel (6) längs verstellbaren und axial durchströmbaren Teil (13) besteht, wobei das zweite Teil (13) in Richtung auf das erste Teil (12) und von diesem weg beweglich ist.

3. Ventil nach Anspruch 1 oder 2, **dadurch gekennzeichnet, dass** zur Bildung der Breite (b) des Strömungsquerschnittes (10) bei den sich relativ zueinander beweglichen Teile (12,13) die dem ersten Teil (12) zugeordnete Begrenzungsfläche (23) und die dem zweiten Teil (13) zugeordnete Begrenzungsfläche (20) im Winkel zur Bewegungsrichtung des Drosselkörpers (14) angeordnet sind.

4. Ventil nach einem der Ansprüche 1 bis 3, **dadurch gekennzeichnet, dass** der von den beiden relativ zueinander beweglichen Teile (12, 13) ausgebildete, veränderbare Strömungsquerschnitt (10) im Winkel zur Bewegungsrichtung des Drosselkörpers (14) angeordnete Begrenzungsflächen (20, 23) aufweist, die radial zur Bewegungsrichtung des Drosselkörpers (14) seine Breite (b) bestimmen.

5. Ventil nach einem der Ansprüche 1 bis 4, **dadurch gekennzeichnet, dass** der Drosselkörper (14) stromaufwärts vom verstellbaren Strömungsquerschnitt (10) ein Dichtelement (21) aufweist, das den Drosselkörper (14) gegenüber dem Sitz (11) abdichtet.

6. Ventil nach einem der Ansprüche 1 bis 5, **dadurch gekennzeichnet, dass** der Drosselkörper (14) eine mit dem Sitz (11) formschlüssige Kontur (16) aufweist, die einen dichten Verschluss des Strömungskanalquerschnittes (10) und eine untere Begrenzung des Spindelhubs ermöglicht.

7. Ventil nach einem der Ansprüche 1 bis 6, **dadurch gekennzeichnet, dass** die Montageeinheit 18) eine Druckregeleinrichtung (17), welche die Druckdifferenz in Strömungsrichtung vor und hinter dem Drosselkörpers (14) konstant hält, umfasst.

8. Ventil nach Anspruch 7, **dadurch gekennzeichnet, dass** die Druckregeleinrichtung (17) eine bewegliche Trennwand (24) mit daran angebrachtem Verschlusskörper (25) aufweist und dass in Abhängigkeit von der auf die bewegliche Trennwand (24) einwirkenden Druckdifferenz der stromaufwärts vor und stromabwärts hinter dem verstellbaren Strömungsquerschnitt (10) anliegenden Drücke ein in Strömungsrichtung in Reihe mit dem verstellbaren Strömungsquerschnitt (10) angeordneter, durch den Verschlusskörper (25) und ein Sitzelement gebildeten Drosselquerschnitt (26) in seiner Querschnittsfläche veränderbar ist.

9. Ventil nach einem der Ansprüche 1 bis 8, **dadurch gekennzeichnet, dass** die Spindel (6) mit einer drehfest an ihr angebrachten Handhabe (22) zur Einstellung der Breite (b) des Strömungskanalquerschnittes (10) versehen ist.

10. Ventil nach Anspruch 9, **dadurch gekennzeichnet, dass** die Handhabe (22) abnehmbar ist.

11. Ventil nach Anspruch 9 oder 10, **dadurch gekennzeichnet, dass** die Handhabe (22) mit Kennungen für die Einstellposition versehen ist, die mit einer drehfest an der Montageeinheit (18) befestigten Kennung korrespondiert, so dass die Voreinstellwerte ablesbar sind.

12. Ventil nach einem der Ansprüche 1 bis 11, **dadurch gekennzeichnet, dass** innerhalb der Montageeinheit eine Druckfeder (28) angeordnet ist, die auf die Ventilspindel (6) einwirkt.

13. Ventil nach einem der Ansprüche 1 bis 12, **dadurch gekennzeichnet, dass** die Montageeinheit stromaufwärts mit einem mit einem Sieb (27) versehen ist.

14. Ventil nach einem der Ansprüche 1 bis 13, **dadurch gekennzeichnet, dass** der Winkel der Begrenzungsflächen (20, 23) zueinander gleich ist und zwischen einem Winkel von 90° zur Spindellängsachse und 0° dazu liegt, vorzugsweise in einem Bereich zwischen 60° und 30°.

## Claims

1. A valve (1) comprising a device for presetting the flow channel cross-section for the liquid flowing through the valve (1) for liquid-conducting heating or cooling systems, consisting of a one- or multi-part housing (2) with at least one inlet (3) arranged upstream and at least one outlet (4) arranged downstream, the inlet (3) being connected to the outlet (4) via a flow channel, and a connection port (5) that terminates in the flow channel, with a spindle (6) being axially displaceable in the connection port (5) with a control part (9) protruding from the housing (2) and a throttle body (14) arranged in the housing (2), acting on a valve seat (11), coupled to the spindle (6), and consisting of at least two parts (12, 13) being movable relatively to each other, with a connection geometry (7) for an actuating attachment (8) axially acting on the spindle (6) and with a head piece (19) arranged in the connection port (5) and the valve seat (11), the parts arranged in the connection port (5), namely at least spindle (6), throttle body (14), valve seat (11), and head piece (19), being combined to a mounting unit (18) that can be mounted and dismounted in the connection port (5) as a unit, the individual parts being captively interconnected, **characterized by that** the parts (12, 13) forming the throttle body (14) and being movable relatively to each other form lateral surfaces provided with apertures, the apertures forming limiting surfaces (20, 23) of the adjustable flow cross-section (10) and the latter being covered at least in parts by the valve seat (11), and that the width (b) of the flow channel cross-section (10) extending radially to the axial movement direction of the throttle body (14) is preset by the position of the second part (13) adjustable by means of the control part (9), and that the height (h) of the adjustable flow channel cross-section (10) extending in parallel to the movement direction of the throttle body (14) is adjustable by the throttle body (14) moved by means of the actuating attachment (8) relatively to the seat (11).

2. The valve according to claim 1, **characterized by that** the throttle body (14) consists at least of a first part (12) rotatably attached at the spindle (6) and a second part (13), connected non-rotatably with the first part (12) and non-rotatably with the seat (11), and being longitudinally adjustable on the spindle (6) and adapted to be axially passed, the second part (13) being movable in the direction toward the first part (12) and away therefrom.

3. The valve according to claim 1 or 2, **characterized by that** for forming the width (b) of the flow cross-section (10) for the parts (12, 13) being movable relatively to each other, the limiting surface (23) assigned to the first part (12) and the limiting surface (20) assigned to the second part (13) are arranged at an angle to the movement direction of the throttle body (14).

4. The valve according to one of claims 1 to 3, **characterized by that** the adjustable flow cross-section (10) formed by the two parts (12, 13) being movable relatively to each other includes limiting surfaces (20, 23) arranged at an angle to the movement direction of the throttle body (14), said limiting surfaces (20, 23) determining the width (b) of the throttle body (14) radially to its movement direction.

5. The valve according to one of claims 1 to 4, **characterized by that** the throttle body (14) includes, upstream of the adjustable flow cross-section (10), a sealing element (21) that seals the throttle body (14) relatively to the seat (11).

6. The valve according to one of claims 1 to 5, **characterized by that** the throttle body (14) includes a contour (16) in a form-fit relationship with the seat (11) that enables a tight closure of the flow channel cross-section (10) and a lower limit for the spindle movement.

7. The valve according to one of claims 1 to 6, **characterized by that** the mounting unit (18) comprises a pressure regulation device (17), which holds constant the pressure differential in the direction of flow before and behind the throttle body (14).

8. The valve according to claim 7, **characterized by that** the pressure regulation device (17) includes a movable separation wall (24) with a closure body (25) attached thereat, and that depending on the pressure differential acting on the movable separation wall (24) of the pressures exerted upstream before and downstream behind the adjustable flow cross-section (10), a throttle cross-section (26) arranged in the direction of flow in series with the adjustable flow cross-section (10), formed by the closure body (25) and a seat element, is adjustable in its cross-section.

9. The valve according to one of claims 1 to 8, **characterized by that** the spindle (6) is provided with a handle (22) non-rotatably attached thereat for adjustment of the width (b) of the flow channel cross-section (10).

10. The valve according to claim 9, **characterized by that** the handle (22) is removable.

11. The valve according to claim 9 or 10, **characterized by that** the handle (22) is provided with markings for the adjustment position corresponding to a marking non-rotatably attached at the mounting unit (18), so that the preset values can be read.

12. The valve according to one of claims 1 to 11, **characterized by that** within the mounting unit, a compression spring (28) is arranged that acts on the valve spindle (6).

13. The valve according to one of claims 1 to 12, **characterized by that** the mounting unit is provided upstream with a sieve (27).

14. The valve according to one of claims 1 to 13, **characterized by that** the angle of the limiting surfaces (20, 23) relatively to each other is identical and is between an angle of 90° for the longitudinal axis of the spindle and 0°, preferably in a range between 60° and 30°.

## Revendications

1. Vanne (1) comprenant un dispositif de préréglage de la section transversale d'un canal d'écoulement pour le liquide traversant la vanne (1) pour des systèmes de chauffage ou de refroidissement dans lesquels s'écoule un liquide, consistant en un boîtier (2) en une ou plusieurs parties avec au moins une entrée (3) arrangée en amont et au moins une sortie (4) arrangée en aval, l'entrée (3) étant raccordée à la sortie (4) par l'intermédiaire d'un canal d'écoulement, et un embout de raccordement (5) qui débouche dans le canal d'écoulement, avec une broche (6) étant axialement déplaçable dans l'embout de raccordement (5) avec une partie de manœuvre (9) faisant saillie à partir du boîtier (2) et un corps d'étranglement (14) arrangé dans le boîtier (2), agissant sur une siège de vanne (11), accouplée à la broche (6), et consistant en au moins deux parties (12, 13) mobiles l'une par rapport à l'autre, avec une géométrie de raccordement (7) pour une saillie de manœuvre (8) agissant axialement sur la broche (6) et avec une pièce de tête (19) arrangée dans l'embout de raccordement (5) et la siège de vanne (11), les parties arrangées dans l'embout de raccordement (5), c'est-à-dire au moins la broche (6), le corps d'étranglement (14), la siège de vanne (11), et la pièce de tête (19), étant combinées à une unité de montage (18) qui peu être montée et démontée dans l'embout de raccordement (5) comme une unité, les parties individuelles étant reliées imperdables entre elles, **caractérisée en ce que** les parties (12, 13) formant le corps d'étranglement (14) et étant mobiles l'une par rapport à l'autre forment des surfaces latérales pourvues d'apertures, les apertures formant des surfaces de délimitation (20, 23) de la section transversale d'écoulement (10) réglable et celle-ci étant recouverte au moins dans des parties par la siège de vanne (11), et que la largeur (b) de la section transversale du canal d'écoulement (10) s'étendant radialement au sens de déplacement axial du corps d'étranglement (14) est préréglée par la position de la deuxième partie (13) réglable au moyen de la partie de manœuvre (9), et que la hauteur (h) de la section transversale du canal d'écoulement (10) réglable s'étendant en parallèle au sens de déplacement du corps d'étranglement (14) est réglable par le corps d'étranglement (14) déplacé au moyen de la saillie de manœuvre (8) par rapport à la siège (11).

2. Vanne selon la revendication 1, **caractérisée en ce que** le corps d'étranglement (14) consiste au moins en une première partie (12) montée de façon rotative à la broche (6) et une deuxième partie (13) montée de façon non rotative à la première partie (12) et de façon non rotative à la siège (11), et étant longitudinalement réglable sur la broche (6) et agencée à être traversée axialement, la deuxième partie (13) étant mobile dans le sens vers la première partie (12) et en éloignement de celle-ci.

3. Vanne selon la revendication 1 ou 2, **caractérisée en ce que** pour former la largeur (b) de la section transversale d'écoulement (10) pour les parties (12, 13) mobiles l'une par rapport à l'autre, la surface de délimitation (23) assignée à la première partie (12) et la surface de délimitation (20) assignée à la deuxième partie (13) sont arrangées à un angle au sens de déplacement du corps d'étranglement (14).

4. Vanne selon une des revendications 1 à 3, **caractérisée en ce que** la section transversale d'écoulement (10) réglable réalisée par les deux parties (12, 13) mobiles l'une par rapport à l'autre comporte des surfaces de délimitation (20, 23) arrangées à un angle au sens de déplacement du corps d'étranglement (14), ces surfaces de délimitation (20, 23) déterminant la largeur (b) du corps d'étranglement (14) radialement à son sens de déplacement.

5. Vanne selon une des revendications 1 à 4, **caractérisée en ce que** le corps d'étranglement (14) comporte, en amont de la section transversale d'écoulement (10) réglable, un élément d'étanchéité (21) qui obture le corps d'étranglement (14) par rapport au siège (11).

6. Vanne selon une des revendications 1 à 5, **caractérisée en ce que** le corps d'étranglement (14) comporte un contour (16) à fixation positive à la siège (11) qui permet une fermeture étanche de la section transversale du canal d'écoulement (10) et une limitation inférieure pour la course de la broche.

7. Vanne selon une des revendications 1 à 6, **caractérisée en ce que** l'unité de montage (18) comprend un dispositif de régulation de pression (17), qui maintient constante la pression différentielle dans le sens d'écoulement devant et derrière le corps d'étranglement (14).

8. Vanne selon la revendication 7, **caractérisée en ce que** le dispositif de régulation de pression (17) comporte une paroi de séparation (24) mobile avec un corps de fermeture (25) monté à celle-ci, et que selon la pression différentielle agissant sur la paroi de séparation (24) mobile des pressions exercées en amont devant et en aval derrière la section transversale d'écoulement (10) réglable, une section transversale d'étranglement (26) arrangée dans le sens d'écoulement en série avec la section transversale d'écoulement (10) réglable, réalisée par la corps de fermeture (25) et un élément de siège, est réglable dans sa section transversale.

9. Vanne selon une des revendications 1 à 8, **caractérisée en ce que** la broche (6) est pourvue d'une poignée (22) de façon non rotative montée à celle-ci pour réglage de la hauteur (b) de la section transversale du canal d'écoulement (10).

10. Vanne selon la revendication 9, **caractérisée en ce que** la poignée (22) est amovible.

11. Vanne selon la revendication 9 ou 10, **caractérisée en ce que** la poignée (22) est pourvue de repères pour la position de réglage correspondant à un repère attaché de façon non rotative à l'unité de montage (18), de façon que les valeurs préréglées puissent être lues.

12. Vanne selon une des revendications 1 à 11, **caractérisée en ce qu'**au-dedans de l'unité de montage, un ressort de compression (28) est arrangé qui agit sur la broche (6) de la vanne.

13. Vanne selon une des revendications 1 à 12, **caractérisée en ce que** l'unité de montage est prévue en amont avec un tamis (27).

14. Vanne selon une des revendications 1 à 13, **caractérisée en ce que** l'angle des surfaces de délimitation (20, 23) l'une par rapport à l'autre est identique et est entre un angle de 90° pour l'axe longitudinal de la broche et 0°, de préférence dans une gamme entre 60° et 30°.
